# EUROPEAN PATENT APPLICATION

(11) **EP 4 841 049 A1**
(43) Date of publication of application: **18.11.2026**
(21) Application number: 25890530.6
(22) Date of filing: 08.02.2025
(51) Int. Cl.: E04H 4/16, E04H 4/14, G01S 5/26, G01S 5/22

(54) **POOL-CLEANING SYSTEM, AND POSITIONING METHOD FOR POOL-CLEANING ROBOT**

(30) Priority: 18.11.2024 CN 202411645246
(71) Applicant: WYBOTICS Co., LTD., Tianjin 300462 (CN)
(72) Inventor: LI, Xiaotian, Tianjin 300462 (CN); LI, Cheng, Tianjin 300462 (CN); SONG, Jianhong, Tianjin 300462 (CN)
(74) Representative: Winter, Brandl - Partnerschaft mbB
(86) International application number: PCT/CN2025/076473
(87) International publication number: WO 2026/102925

(57) **Abstract**

The present application provides a pool cleaning system and a positioning method for a pool cleaning robot. The pool cleaning system includes a base station and a pool cleaning robot. The pool cleaning robot is provided with an acoustic signal transmitter I, the base station is provided with at least two acoustic signal receivers I, and the acoustic signal receivers I are configured to receive an acoustic signal emitted by the acoustic signal transmitter I. The acoustic signal emitted by the acoustic signal transmitter I can be received by the acoustic signal receivers I on the base station. A distance between the pool cleaning robot and the base station can be obtained based on a time taken for the acoustic signal to travel from emission to reception. In addition, at least two acoustic signal receivers I are provided, and different acoustic signal receivers I receive the acoustic signal at different times, thereby forming a time difference. A distance difference between the different acoustic signal receivers I relative to the acoustic signal transmitter I can be obtained based on the time difference and a sound velocity, and an azimuth angle of the pool cleaning robot relative to the base station can be obtained in combination with a position of each acoustic signal receiver I.

## Description

This application claims priority to Chinese Patent Application No. 202411645246.4, filed with the China National Intellectual Property Administration on November 18, 2024 and titled "Pool Cleaning System and Positioning Method for Pool Cleaning Robot", the entire content of which is incorporated herein by reference.

### TECHNICAL FIELD

The present application relates to the technical field of robots, and in particular, to a pool cleaning system and a positioning method for a pool cleaning robot.

### BACKGROUND

A pool cleaning robot is a robot that can perform a cleaning task in a pool. For example, the pool cleaning robot can be used to clean the pool bottom and walls of a pool such as a swimming pool or a fish pond. The pool cleaning robot is usually used in cooperation with a base station, and the base station can charge the pool cleaning robot, so that the pool cleaning robot has relatively sufficient power before performing its cleaning task.

An ideal design goal is that the pool cleaning robot can automatically return to a position where the base station is located and then connect with the base station after completing the task. The premise for achieving this goal is to accurately position the pool cleaning robot. However, in practical applications, inaccurate positioning often makes it difficult for the pool cleaning robot to return to the base station or establish a smooth connection with the base station. In addition, existing products are unable to achieve accurate absolute position, leading to low cleaning efficiency and an inability to achieve full coverage.

Therefore, how to accurately position the pool cleaning robot is an urgent problem that needs to be solved.

### SUMMARY

The present application provides a pool cleaning system and a positioning method for a pool cleaning robot, aiming to accurately position the pool cleaning robot.

Specific technical solutions are as follows.

An embodiment of a first aspect of the present application provides a pool cleaning system. The pool cleaning system includes a base station and a pool cleaning robot, where the pool cleaning robot is provided with an acoustic signal transmitter I, the base station is provided with at least two acoustic signal receivers I, and the acoustic signal receivers I are configured to receive an acoustic signal emitted by the acoustic signal transmitter I.

In the pool cleaning system in the embodiment of the present application, the pool cleaning robot is provided with the acoustic signal transmitter I, and the base station is provided with the acoustic signal receivers I. In this arrangement, when the pool cleaning robot is in a pool, the acoustic signal emitted by the acoustic signal transmitter I can be received by the acoustic signal receivers I on the base station. A distance between the pool cleaning robot and the base station can be obtained based on a time taken for the acoustic signal to travel from emission to reception. In addition, at least two acoustic signal receivers I are provided on the base station, so that different acoustic signal receivers I receive the acoustic signal at different times, thereby forming a time difference. A distance difference between the different acoustic signal receivers I relative to the acoustic signal transmitter I can be obtained based on the time difference and a sound velocity, and an azimuth angle of the acoustic signal transmitter I relative to the base station, namely an azimuth angle of the pool cleaning robot relative to the base station, can be obtained in combination with the position distribution of the acoustic signal receivers I. When the distance between the pool cleaning robot and the base station and the azimuth angle of the pool cleaning robot relative to the base station are obtained, the position or area where the pool cleaning robot is located relative to the base station is also obtained, thereby accurately positioning the pool cleaning robot.

In some embodiments, each vibration element for the acoustic signal transmitter I and/or the acoustic signal receivers I includes a piezoelectric ceramic; and
each of the acoustic signal transmitter I and/or the acoustic signal receivers I includes a metal housing.

In some embodiments, the piezoelectric ceramic included in the acoustic signal transmitter I and/or the acoustic signal receivers I is annular or tubular or spherical or hemispherical.

In some embodiments, the acoustic signal emitted by the acoustic signal transmitter I has a frequency greater than or equal to 10 KHz and less than or equal to 100 KHz.

In some embodiments, the base station is provided with at least three acoustic signal receivers I, and the acoustic signal receivers I are configured to receive the acoustic signal emitted by the acoustic signal transmitter I, where:
a distance between two closest acoustic signal receivers I is L₁, a distance between two farthest acoustic signal receivers I is L₂, and L₁ and L₂ satisfy a condition: L₂≥2L₁.

In some embodiments, L₁ and L₂ further satisfy a condition:
${L}_{2} ⩽ 50 {L}_{1} .$

In some embodiments, L₁ and L₂ further satisfy a condition:
${L}_{2} ⩽ 10 {L}_{1} .$

In some embodiments, the base station is further provided with an acoustic signal transmitter II, the pool cleaning robot is further provided with an acoustic signal receiver II, and the acoustic signal receiver II is configured to receive an acoustic signal emitted by the acoustic signal transmitter II.

In some embodiments, one acoustic signal transmitter II is provided, and one acoustic signal receiver II is provided.

In some embodiments, the acoustic signal emitted by the acoustic signal transmitter II has a frequency greater than or equal to 10 KHz and less than or equal to 100 KHz.

In some embodiments, one acoustic signal transmitter I is provided, and three acoustic signal receivers I are provided.

In some embodiments, the three acoustic signal receivers I are distributed on the same straight line.

In some embodiments, the two closest acoustic signal receivers I and the two farthest acoustic signal receivers I are distributed on the same straight line.

In some embodiments, the pool cleaning robot further includes a pose sensor and/or a depth sensor.

In some embodiments, a position or area where the pool cleaning robot is located relative to the base station is obtained through the acoustic signal.

In some embodiments, the pool cleaning robot can dock with the base station.

An embodiment of a second aspect of the present application provides a positioning method for a pool cleaning robot, implemented based on the pool cleaning system according to any one of the above-mentioned embodiments, including:
emitting an acoustic signal by an acoustic signal transmitter I;
obtaining acoustic signal information of at least two acoustic signal receivers; and
obtaining a position or area where the pool cleaning robot is located relative to a base station based on the acoustic signal information.

In some embodiments, the acoustic signal information includes a time difference between times when the acoustic signal is received by different acoustic signal receivers I.

In some embodiments, obtaining the acoustic signal information of the at least two acoustic signal receivers includes:
obtaining a time difference between times when the acoustic signal is received by the two closest acoustic signal receivers I, and obtaining a set of time differences between times when the acoustic signal is received by the two farthest acoustic signal receivers I.

In some embodiments, the positioning method includes:
emitting the acoustic signal by the acoustic signal transmitter I;
obtaining a time difference between times when the acoustic signal is received by the two closest acoustic signal receivers I, and obtaining a set of time differences between times when the acoustic signal is received by the two farthest acoustic signal receivers I;
obtaining position information I of the pool cleaning robot relative to the base station based on position information of the two closest acoustic signal receivers I and the time difference between the times when the acoustic signal is received by these two acoustic signal receivers I; determining a set of position information II of the pool cleaning robot relative to the base station based on position information of the two farthest acoustic signal receivers I and the set of time differences between the times when the acoustic signal is received by these two acoustic signal receivers I; and
comparing the set of position information II with the position information I, and determining a piece of position information II from the set of position information II as a current position of the pool cleaning robot.

### BRIEF DESCRIPTION OF THE DRAWINGS

To describe the technical solutions of the embodiments of the present application or the prior art more clearly, the accompanying drawings required for describing the embodiments or the prior art will be briefly described below. Apparently, the accompanying drawings in the following description are only some embodiments of the present application, and those of ordinary skills in the art can further obtain other drawings from these drawings without creative efforts.
FIG. 1 is a schematic diagram of a base station provided by an embodiment of the present application.
FIG. 2 is a schematic diagram of a pool cleaning robot provided by an embodiment of the present application.
FIG. 3 is a schematic diagram of a base station provided by another embodiment of the present application.
FIG. 4 is a schematic diagram of a base station provided by another embodiment of the present application.
FIG. 5 is a schematic structural diagram of an acoustic signal transmitter I provided by an embodiment of the present application.
FIG. 6 is a schematic structural diagram of an acoustic signal receiver I provided by an embodiment of the present application.
FIG. 7 is a schematic flowchart of a positioning method for a pool cleaning robot provided by an embodiment of the present application.

### DETAILED DESCRIPTION OF THE EMBODIMENTS

To make the objectives, technical solutions, and advantages of the present application clearer, the present application will be further described in detail below with reference to the accompanying drawings and embodiments. It should be understood that the specific embodiments described herein are merely used to explain the present application, and are not intended to limit the present application.

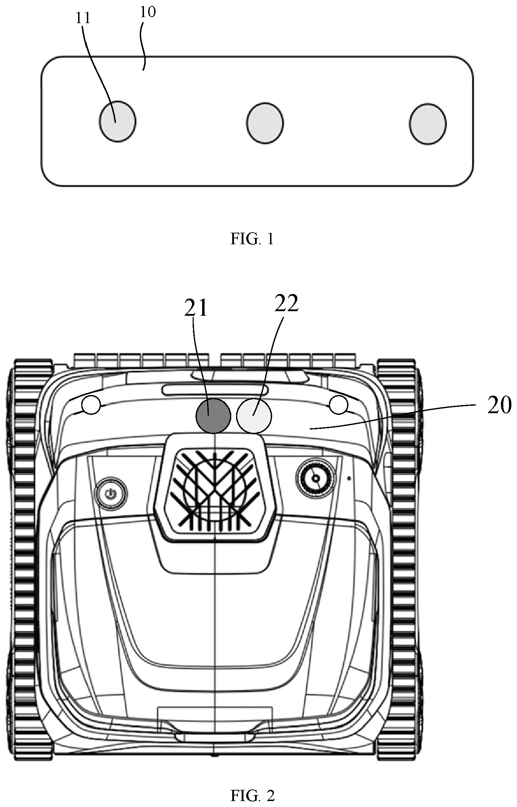

An embodiment of a first aspect of the present application provides a pool cleaning system. As shown in FIG. 1 and FIG. 2, the pool cleaning system includes a base station 10 and a pool cleaning robot 20. The pool cleaning robot 20 is provided with an acoustic signal transmitter I 21, and the base station 10 is provided with at least two acoustic signal receivers I 11. The acoustic signal receivers I 11 are configured to receive an acoustic signal emitted by the acoustic signal transmitter I 21.

In the pool cleaning system in the embodiment of the present application, a position or area where the pool cleaning robot 20 is located relative to the base station 10 can be obtained through the acoustic signal.

Specifically, in the pool cleaning system in the embodiment of the present application, the pool cleaning robot 20 is provided with the acoustic signal transmitter I 21, and the base station 10 is provided with the acoustic signal receivers I 11. In this arrangement, when the pool cleaning robot 20 is in a pool, the acoustic signal emitted by the acoustic signal transmitter I 21 can be received by the acoustic signal receivers I 11 on the base station 10. A distance between the pool cleaning robot 20 and the base station 10 can be obtained based on a time taken for the acoustic signal to travel from emission to reception.

In addition, at least two acoustic signal receivers I 11 are provided on the base station 10, so that the different acoustic signal receivers I 11 receive the acoustic signal at different times, thereby forming a time difference. A distance difference between the different acoustic signal receivers I 11 relative to the acoustic signal transmitter I 21 can be obtained based on the time difference and a sound velocity, and an azimuth angle of the acoustic signal transmitter I 21 relative to the base station 10, namely an azimuth angle of the pool cleaning robot 20 relative to the base station 10, can be obtained in combination with position distribution of the acoustic signal receivers I 11.

When the distance between the pool cleaning robot 20 and the base station 10 and the azimuth angle of the pool cleaning robot 20 relative to the base station 10 are obtained, the position or area where the pool cleaning robot 20 is located relative to the base station 10 is also obtained, thereby accurately positioning the pool cleaning robot 20.

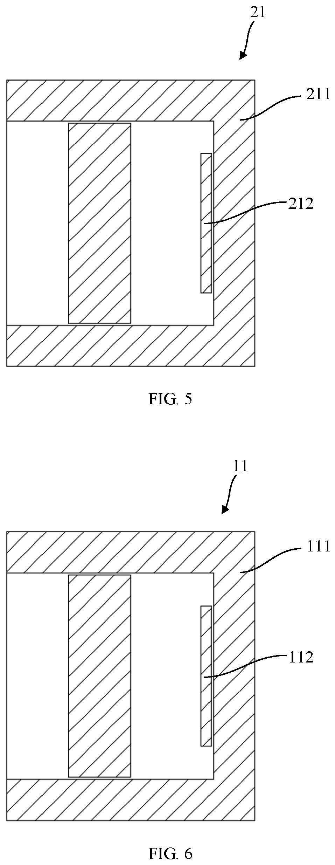

In some embodiments, as shown in FIG. 5, a vibration element of the acoustic signal transmitter I 21 includes a piezoelectric ceramic 212, and the acoustic signal transmitter I 21 includes a metal housing 211.

For the acoustic signal transmitter I 21 with a low operating frequency, its vibration element is often larger in size, and the larger size is not conducive to a structural design of the acoustic signal transmitter I 21 and positioning precision. The applicants have found that when the acoustic signal transmitter I 21 has the metal housing 211, and the vibration element of the acoustic signal transmitter I 21 includes the piezoelectric ceramic 212, it is beneficial for reducing the overall resonant frequency, thereby facilitating the reduction of the size of the vibration element. This can improve the flexibility of the structural design and also help enhance the positioning precision.

In some embodiments, as shown in FIG. 6, the vibration element of each acoustic signal receiver I 11 includes a piezoelectric ceramic 112, and each acoustic signal receiver I 11 includes a metal housing 111.

For each acoustic signal receiver I 11 with a low operating frequency, its vibration element is often larger in size, and the larger size is not conducive to a structural design of the acoustic signal receiver I 11 and the positioning precision. The applicants have found that when the acoustic signal receiver I 11 has the metal housing 111, and the vibration element of the acoustic signal receiver I 11 includes the piezoelectric ceramic 112, it is beneficial for reducing the overall resonant frequency, thereby facilitating the reduction of the size of the vibration element. This can improve the flexibility of the structural design and also help enhance the positioning precision.

Further, the metal housing 211 of the acoustic signal transmitter I 21 may be equipped with one or more layers of other materials, such as ABS (a terpolymer of acrylonitrile, butadiene, and styrene) or polypropylene (PP), to further achieve waterproofing, oxidation resistance, corrosion resistance, or the like. Similarly, the metal housing 111 of each acoustic signal receiver I 11 may also be equipped with one or more layers of other materials, such as ABS or PP.

Further, the piezoelectric ceramic included in the acoustic signal transmitter I 21 and/or the acoustic signal receivers I 11 is annular or tubular or spherical or hemispherical. The applicants have also found that by optimizing the shape of the piezoelectric ceramic, for example, setting the shape of the piezoelectric ceramic as annular, tubular, spherical, or hemispherical, the resonant frequency can also be reduced, thereby achieving the goal of reducing the size of the vibration element. In addition, compared with a flat piezoelectric ceramic, the annular, tubular, spherical, or hemispherical piezoelectric ceramic has a wider reception/transmission angle. The annular or tubular piezoelectric ceramic has the advantages of low costs and convenience in manufacturing.

In some embodiments, the acoustic signal emitted by the acoustic signal transmitter I has a frequency greater than or equal to 10 KHz and less than or equal to 100 KHz.

The higher the frequency of the acoustic signal, the stronger the directionality, which is beneficial for improving the positioning precision. However, excessive high directionality also leads to the problem of difficulty in positioning or low positioning efficiency. Therefore, in the actual positioning process, it is necessary to consider not only the directionality of the acoustic signal but also the propagation range of the acoustic signal. The applicants have carried out extensive testing work and found that the acoustic signal with a frequency ranging from 10 KHz to 100 KHz is a preferred choice. This can ensure good directionality while also maintaining a reasonable propagation range of the acoustic signal, thereby ensuring both positioning precision and efficiency.

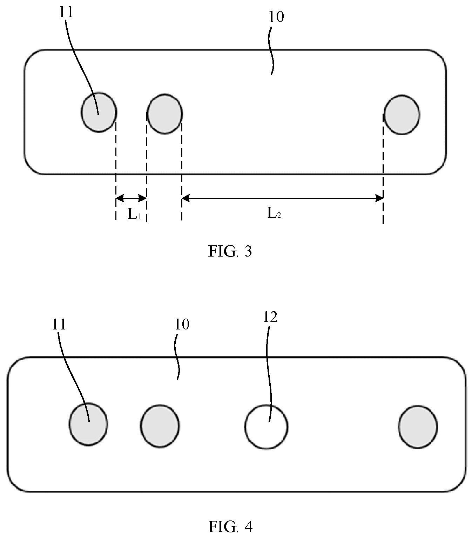

In some embodiments, as shown in FIG. 3, the base station 10 is provided with at least three acoustic signal receivers I 11, and the acoustic signal receivers I 11 are configured to receive the acoustic signal emitted by the acoustic signal transmitter I 21. A distance between two closest acoustic signal receivers I 11 is L₁, and a distance between two farthest acoustic signal receivers I 11 is L₂. L₁ and L₂ satisfy a condition: L₂ ≥ 2L₁.

As can be known from the foregoing, a distance between the acoustic signal transmitter I 21 and each of the different acoustic signal receivers I 11 on the base station 10 can be obtained according to a time difference from the time when the acoustic signal is emitted to the time when it is received by the acoustic signal receiver I 11. After the above-mentioned distances are obtained, the azimuth angle of the acoustic signal transmitter I 21 relative to the base station 10 can be further obtained. It is not difficult to understand that at least two acoustic signal receivers I 11 need to be provided on the base station 10, in order to implement the above-mentioned positioning process.

Taking a case where two acoustic signal receivers I 11 are arranged on the base station 10 as an example, the distance between the two acoustic signal receivers I 11 should not be excessively small, as this may lead to insufficient precision in the calculated result due to the excessively small distance between the two acoustic signal receivers I 11. However, the applicants have further found that when the distance between the two acoustic signal receivers I 11 is large, using conventional sine wave phase detection can become problematic, specifically, in a case where the time when the acoustic signal reaches one of the acoustic signal receivers I 11 is used as a timing starting point, and the time when the acoustic signal reaches the other acoustic signal receiver I 11 is used as a timing ending point, it becomes difficult to determine the number of identifiable full wave cycles during a time period between the timing starting point and the timing ending point. This is mainly because the amplitude of the first wave may be not the same, making it difficult to obtain a highly accurate result. If the above-mentioned number of full wave cycles is determined inaccurately, the time difference of arrival of the acoustic signal between the different acoustic signal receivers I 11 will be inaccurate, and thus the calculated distances between the acoustic signal transmitter I 21 and the acoustic signal receivers I 11 are inaccurate, thereby affecting the final positioning accuracy. In summary, when two acoustic signal receivers I 11 are arranged on the base station 10, the excessively small distance between the two acoustic signal receivers I 11 may affect the positioning precision, while the excessively large distance may affect the positioning accuracy.

To solve the contradiction between the positioning precision and the positioning accuracy, the applicants propose the following solutions.

The base station 10 is provided with at least three acoustic signal receivers I 11, where a distance between the two closest acoustic signal receivers I is L₁, a distance between the two farthest acoustic signal receivers I is L₂, and L₁ and L₂ satisfy a condition: ${L}_{2} \geq 2 {L}_{1} .$

Based on the above-mentioned arrangement, when the acoustic signal transmitter I emits an acoustic signal, a time difference between times when the acoustic signal is received by the two closest acoustic signal receivers I and a set of time differences between times when the acoustic signal is received by the two farthest acoustic signal receivers I can be obtained.

Position information I of the pool cleaning robot 20 relative to the base station 10 is obtained based on position information of the two closest acoustic signal receivers I and the time difference between the times when the acoustic signal is received by these two acoustic signal receivers I. It can be understood that, using the time when the acoustic signal reaches one of the acoustic signal receivers I 11 as the timing starting point, and the time when the acoustic signal reaches the other acoustic signal receiver I 11 as the timing ending point, the number of full wave cycles during the time period between the timing starting point and the timing ending point is also relatively small due to the relatively small distance between the two acoustic signal receivers I, which is beneficial for determining the number of full wave cycles.

A set of position information II of the pool cleaning robot 20 relative to the base station 10 is determined based on the position information of the two closest acoustic signal receivers I and the time difference between the times when the acoustic signal is received by these two acoustic signal receivers I. During the process of determining the time difference between times when the acoustic signal is received by the two farthest acoustic signal receivers I, the identification of full wave cycles becomes more difficult due to the presence of a relatively large number of full wave cycles during the time period between the timing starting point and the timing ending point. Therefore, several values can be determined for the number of full wave cycles, such as 2 or 3. This results in a set of time differences (including 2 to 3 time differences, for example), and correspondingly, the finally obtained position information II of the pool cleaning robot 20 relative to the base station 10 is a set of results (including 2 to 3 possible results, for example).

Finally, the set of position information II is compared with the position information I, and a piece of position information II is determined from the set of position information II as a current position of the pool cleaning robot 20. Therefore, the current position of the pool cleaning robot 20 finally determined can ensure both precision and accuracy.

In some embodiments, L₁ and L₂ further satisfy a condition: L₂ ≤ 50L₁.

If the value of L₂ is larger, the base station 10 needs to be designed with a larger size, resulting in a significant increase in material costs of the base station 10. In addition, a larger base station 10 may also face problems such as inconvenience in transportation and unattractiveness after installation. Therefore, in this embodiment, L₁ and L₂ further satisfy a condition: L₂ ≤ 50L₁, which avoids the problem of the base station 10 being too large.

Further, L₁ and L₂ further satisfy a condition: L₂ ≤ 10L₁.

In this arrangement, the base station 10 can be miniaturized, while maintaining positioning precision and accuracy.

In some embodiments, as shown in FIG. 2 and FIG. 4, the base station 10 is further provided with an acoustic signal transmitter II 12, the pool cleaning robot 20 is further provided with an acoustic signal receiver II 22, and the acoustic signal receiver II 22 is configured to receive an acoustic signal emitted by the acoustic signal transmitter II 12.

The acoustic signal receiver I is located in the base station 10, and the base station 10 can know, through the acoustic signal receiver I, the time when the acoustic signal is received. However, since the acoustic signal transmitter I is located in the pool cleaning robot 20, it is difficult to determine the time when the acoustic signal is emitted, making it difficult to obtain the time taken for the acoustic signal to travel from emission to reception.

In this embodiment, the base station 10 is further provided with an acoustic signal transmitter II 12, and the pool cleaning robot 20 is further provided with an acoustic signal receiver II 22. When the pool cleaning robot 20 needs to be positioned, the acoustic signal transmitter II 12 first emits an acoustic signal. After the acoustic signal receiver II 22 on the pool cleaning robot 20 receives the acoustic signal, the acoustic signal transmitter I on the pool cleaning robot 20 immediately emits an acoustic signal. After this acoustic signal is received by the acoustic signal receiver I on the base station 10, the base station 10 can obtain the total time taken for the acoustic signal to travel from emission by the acoustic signal transmitter II 12 to reception by the acoustic signal receiver I, and the distance between the pool cleaning robot 20 and the base station 10 can be obtained based on the total time and the sound velocity. Definitely, the time when the acoustic signal transmitter I emits the acoustic signal can also be obtained indirectly based on the total time.

Further, one acoustic signal transmitter II 12 is provided, and one acoustic signal receiver II 22 is provided. This means that no redundancy is required for the acoustic signal transmitter II 12 and the acoustic signal receiver II 22, which helps reduce costs.

In some embodiments, the acoustic signal emitted by the acoustic signal transmitter II 12 has a frequency greater than or equal to 10 KHz and less than or equal to 100 KHz.

As mentioned above, the acoustic signal with a frequency ranging from 10 KHz to 100 KHz is a preferred choice. This can ensure good directionality while also maintaining a reasonable propagation range of the acoustic signal, thereby ensuring both positioning precision and efficiency. Therefore, the acoustic signal emitted by the acoustic signal transmitter II 12 is preferably within the above-mentioned frequency range.

In some embodiments, one acoustic signal transmitter I is provided, and three acoustic signal receivers I are provided.

A calculation result indicating the position of the pool cleaning robot 20 can be obtained by any two of the three acoustic signal receivers I. An optimal solution ensuring both precision and accuracy can be determined by comparing a plurality of calculation results.

Further, the three acoustic signal receivers I are distributed on the same straight line.

When specifically calculating the position information of the pool cleaning robot 20, a reference plane is usually determined from two of the acoustic signal receivers I, and then coordinates of the pool cleaning robot 20 relative to the reference plane are calculated. If three acoustic signal receivers I are located on different straight lines, a plurality of reference planes can be determined from these three acoustic signal receivers I, and included angles are present among the plurality of reference planes, making the calculation process complicate and increasing the computational load. Therefore, in this embodiment, the three acoustic signal receivers I are distributed on the same straight line, so that only one reference plane can be determined from these three acoustic signal receivers I, thereby simplifying the calculation process and reducing the computational load.

Similarly, when at least three acoustic signal receivers I are arranged on the base station 10, the two closest acoustic signal receivers I and the two farthest acoustic signal receivers I are distributed on the same straight line. In other words, if three acoustic signal receivers I are provided, these three acoustic signal receivers I are distributed on the same straight line. If more than three acoustic signal receivers I are provided, and no acoustic signal receiver I is shared between the two closet acoustic signal receivers I and the two farthest acoustic signal receivers I, four acoustic signal receivers I are involved, and these four acoustic signal receivers I are distributed on the same straight line. This simplifies the calculation process and reduces the computational load.

In some embodiments, the pool cleaning robot 20 further includes a pose sensor and/or a depth sensor. This allows to obtain pose information and depth information of the pool cleaning robot 20. Based on the position information, the pose information, the depth information, and other information of the pool cleaning robot 20, a path of the pool cleaning robot 20 can be better planned and adjusted, so that the pool cleaning robot 20 can return to the base station 10 after completing the operation.

In some embodiments, the pool cleaning robot 20 can dock with the base station 10. It can be understood that, based on the fact that the pool cleaning robot 20 can be positioned, the pool cleaning system can plan a path for the pool cleaning robot 20 to return to the base station 10, and adjust a movement direction of the pool cleaning robot 10 according to the path and a real-time positioning result. Finally, the pool cleaning robot 10 returns to the position where the base station 10 is located and docks with the base station 10. When the pool cleaning robot 20 docks with the base station 10, the base station 10 can charge the pool cleaning robot 20.

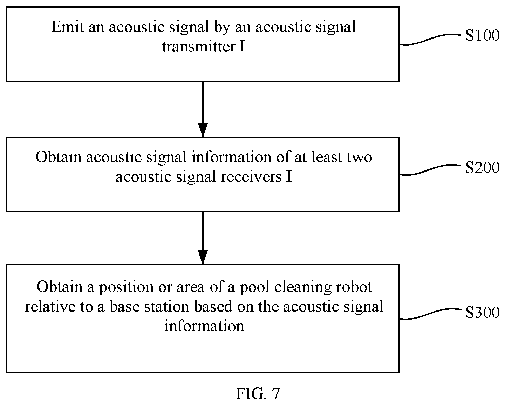

An embodiment of a second aspect of the present application provides a positioning method for a pool cleaning robot 20. The positioning method is implemented based on the pool cleaning system according to any one of the above-mentioned embodiments. As shown in FIG. 7, the positioning method includes the following steps.

In step S100, an acoustic signal transmitter I 21 emits an acoustic signal.

In step S200, acoustic signal information of at least two acoustic signal receivers I 11 is obtained.

In step S300, a position or area where the pool cleaning robot 20 is located relative to a base station 10 is obtained based on the acoustic signal information.

Through the positioning method for the pool cleaning robot 20 in the embodiment of the present application, a distance between the pool cleaning robot 20 and the base station 10 and an azimuth angle of the pool cleaning robot 20 relative to the base station 10 can be obtained, so that the position or area where the pool cleaning robot 20 is located can be obtained, thereby accurately positioning the pool cleaning robot 20.

In some embodiments, the acoustic signal information includes a time difference between times when the acoustic signal is received by different acoustic signal receivers I 11.

The distance difference between the different acoustic signal receivers I 11 relative to the acoustic signal transmitter I 21 can be obtained based on the time difference and the sound velocity, and then the azimuth angle of the pool cleaning robot 20 relative to the base station 10 can be further obtained based on the distance difference in combination with position distribution of the acoustic signal receivers I 11.

In some embodiments, obtaining the acoustic signal information of the at least two acoustic signal receivers includes:
obtaining a time difference between times when the acoustic signal is received by the two closest acoustic signal receivers I, and obtaining a set of time differences between times when the acoustic signal is received by the two farthest acoustic signal receivers I.

This allows for the determination of an optimal solution that characterizes the position information of the pool cleaning robot 20 through comparison.

In some embodiments, the positioning method includes:
emitting an acoustic signal by an acoustic signal transmitter I;
obtaining a time difference between times when the acoustic signal is received by the two closest acoustic signal receivers I, and obtaining a set of time differences between times when the acoustic signal is received by the two farthest acoustic signal receivers I;
obtaining position information I of the pool cleaning robot 20 relative to the base station 10 based on position information of the two closest acoustic signal receivers I and the time difference between the times when the acoustic signal is received by these two acoustic signal receivers I; determining a set of position information II of the pool cleaning robot 20 relative to the base station 10 based on position information of the two farthest acoustic signal receivers I and the set of time differences between the times when the acoustic signal is received by these two acoustic signal receivers I; and
comparing the set of position information II with the position information I, and determining a piece of position information II from the set of position information II as a current position of the pool cleaning robot 20.

In this embodiment, the position information I of the pool cleaning robot 20 relative to the base station 10 is obtained based on the position information of the two closet acoustic signal receivers I and the time difference between the times when the acoustic signal is received by the two acoustic signal receivers I. It can be understood that, using the time when the acoustic signal reaches one of the acoustic signal receivers I 11 as a timing starting point, and the time when the acoustic signal reaches the other acoustic signal receiver I 11 as a timing ending point, the number of full wave cycles during the time period between the timing starting point and the timing ending point is also relatively small due to the relatively small distance between the two acoustic signal receivers I, which is beneficial for determining the number of full wave cycles.

A set of position information II of the pool cleaning robot 20 relative to the base station 10 is determined based on the position information of the two closest acoustic signal receivers I and the time difference between the times when the acoustic signal is received by the two acoustic signal receivers I. During the process of determining the time difference between times when the acoustic signal is received by the two farthest acoustic signal receivers I, the identification of full wave cycles becomes more difficult due to the presence of a relatively large number of full wave cycles during the time period between the timing starting point and the timing ending point. Therefore, several values can be determined for the number of full wave cycles, such as 2 or 3. This results in a set of time differences (including 2 to 3 time differences, for example), and correspondingly, the finally obtained position information II of the pool cleaning robot 20 relative to the base station 10 is a set of results (including 2 to 3 possible results, for example).

Finally, the set of position information II is compared with the position information I, and a piece of position information II is determined from the set of position information II as the current position of the pool cleaning robot 20. Therefore, the current position of the pool cleaning robot 20 finally determined can ensure both precision and accuracy.

The same or similar reference numerals in the accompanying drawings of this embodiment correspond to the same or similar components. In the description of the present application, it should be understood that, the orientations or positional relationships indicated by the terms such as "upper", "lower" , "left", and "right" are based on the orientations or positional relationships shown in the accompanying drawings, and are only for convenience in describing the present application and simplifying the description, rather than indicating or implying that the device or element referred to must have a specific orientation or be constructed and operated in a specific orientation. Therefore, the terms describing the positional relationships in the accompanying drawings are only for illustrative purposes, and should not be construed as limiting this patent. For those of ordinary skills in the art, the specific meanings of the foregoing terms can be understood based on specific situations.

The foregoing descriptions are merely preferred embodiments of the present application, and are not intended to limit the present application. Any modifications, equivalent replacements, improvements, and the like made within the spirit and principle of the present application shall fall within the protection scope of the present application.

## Claims

1. A pool cleaning system, comprising:
a base station; and
a pool cleaning robot, wherein the pool cleaning robot is provided with an acoustic signal transmitter I, the base station is provided with at least two acoustic signal receivers I, and the acoustic signal receivers I are configured to receive an acoustic signal emitted by the acoustic signal transmitter I.

2. The pool cleaning system according to claim 1, wherein each vibration element for the acoustic signal transmitter I and/or the acoustic signal receivers I comprises a piezoelectric ceramic; and
each of the acoustic signal transmitter I and/or the acoustic signal receivers I comprises a metal housing.

3. The pool cleaning system according to claim 2, wherein the piezoelectric ceramic included in the acoustic signal transmitter I and/or the acoustic signal receivers I is annular or tubular or spherical or hemispherical.

4. The pool cleaning system according to claim 2, wherein the piezoelectric ceramic included in the acoustic signal transmitter I and/or the acoustic signal receivers I is annular or tubular.

5. The pool cleaning system according to claim 1, wherein the acoustic signal emitted by the acoustic signal transmitter I has a frequency greater than or equal to 10 KHz and less than or equal to 100 KHz.

6. The pool cleaning system according to claim 1, wherein the base station is provided with at least three acoustic signal receivers I, and the acoustic signal receivers I are configured to receive the acoustic signal emitted by the acoustic signal transmitter I, and
wherein a distance between two closest acoustic signal receivers I is L₁, a distance between two farthest acoustic signal receivers I is L₂, and L₁ and L₂ satisfy a condition: L₂ ≥ 2L₁.

7. The pool cleaning system according to claim 6, wherein L₁ and L₂ further satisfy a condition: ${L}_{2} \leq 50 {L}_{1} .$

8. The pool cleaning system according to claim 7, wherein L₁ and L₂ further satisfy a condition: ${L}_{2} \leq 10 {L}_{1} .$

9. The pool cleaning system according to any one of claims 1 to 6, wherein the base station is further provided with an acoustic signal transmitter II, the pool cleaning robot is further provided with an acoustic signal receiver II, and the acoustic signal receiver II is configured to receive an acoustic signal emitted by the acoustic signal transmitter II.

10. The pool cleaning system according to claim 9, wherein one acoustic signal transmitter II is provided, and one acoustic signal receiver II is provided.

11. The pool cleaning system according to claim 9, wherein the acoustic signal emitted by the acoustic signal transmitter II has a frequency greater than or equal to 10 KHz and less than or equal to 100 KHz.

12. The pool cleaning system according to any one of claims 1 to 6, wherein one acoustic signal transmitter I is provided, and three acoustic signal receivers I are provided.

13. The pool cleaning system according to claim 12, wherein the three acoustic signal receivers I are distributed on a same straight line.

14. The pool cleaning system according to claim 6, wherein the two closest acoustic signal receivers I and the two farthest acoustic signal receivers I are distributed on a same straight line.

15. The pool cleaning system according to any one of claims 1 to 6, wherein the pool cleaning robot further comprises a pose sensor and/or a depth sensor.

16. The pool cleaning system according to any one of claims 1 to 6, wherein a position or area where the pool cleaning robot is located relative to the base station is obtained through the acoustic signal.

17. The pool cleaning system according to claim 1, wherein the pool cleaning robot is capable of docking with the base station.

18. A positioning method for a pool cleaning robot, implemented based on the pool cleaning system according to any one of claims 1 to 17, wherein the positioning method comprises:
emitting an acoustic signal by an acoustic signal transmitter I;
obtaining acoustic signal information of at least two acoustic signal receivers; and
obtaining a position or area where the pool cleaning robot is located relative to a base station based on the acoustic signal information.

19. The positioning method according to claim 18, wherein the acoustic signal information comprises a time difference between times when the acoustic signal is received by different acoustic signal receivers I.

20. The positioning method according to claim 18, wherein obtaining the acoustic signal information of the at least two acoustic signal receivers comprises:
obtaining a time difference between times when the acoustic signal is received by two closest acoustic signal receivers I, and obtaining a set of time differences between times when the acoustic signal is received by two farthest acoustic signal receivers I.

21. The positioning method for the pool cleaning robot according to claim 18, comprising:
emitting the acoustic signal by the acoustic signal transmitter I;
obtaining a time difference between times when the acoustic signal is received by two closest acoustic signal receivers I, and obtaining a set of time differences between times when the acoustic signal is received by two farthest acoustic signal receivers I;
obtaining position information I of the pool cleaning robot relative to the base station based on position information of the two closest acoustic signal receivers I and the time difference between the times when the acoustic signal is received by these two closest acoustic signal receivers I; determining a set of position information II of the pool cleaning robot relative to the base station based on position information of the two farthest acoustic signal receivers I and the set of time differences between the times when the acoustic signal is received by these two farthest acoustic signal receivers I; and
comparing the set of position information II with the position information I, and determining a piece of position information II from the set of position information II as a current position of the pool cleaning robot.
